Europäisches Patentamt

European Patent Office

Office européen des brevets

(19)

(11) Publication number: 0 384 097

A1

# EUROPEAN PATENT APPLICATION

(12)

(21) Application number: 89850057.4

(22) Date of filing: 20.02.89

(51) Int. Cl.5: **B32B 27/08**

(43) Date of publication of application:
29.08.90 Bulletin 90/35

(84) Designated Contracting States:
AT BE CH DE ES FR GB GR IT LI LU NL SE

(71) Applicant: AB AKERLUND & RAUSING
Box 22
S-221 00 Lund(SE)

(72) Inventor: Sunesson, Birgit
Järavallsvägen 74
S-237 00 Bjärred(SE)
Inventor: Persson, Bengt
Grönegatan 28
S-222 24 Lund(SE)

(74) Representative: Graudums, Valdis et al
Albihn West AB Stora Nygatan 15
S-411 08 Göteborg(SE)

(54) Laminated plastic sheets and a method for producing the same.

(57) The present invention relates to a laminated plastic sheet, more precisely a polyethylene/polyamide sheet, as well as a method for producing the same.

In a surprising manner we have discovered that it is possible to produce such plastic sheets without the use of a binder, by using LLDPE, linear low density polyethylene. By means of an extrudering device it is accordingly possible to obtain laminated plastic sheets comprising LLDPE and polyamide bonded directly to each other without the use of a binder.

EP 0 384 097 A1

## Laminated plastic sheets and a method for producing the same

The present invention relates to laminated plastic sheets, more precisely laminated plastic sheets comprising at least one polyethylene layer and at least one polyamide layer, and a method for producing the same.

Laminated plastic sheets comprising polyethylene and polyamide have been used for a long time within packaging industry, first of all to pack perishable goods such as meet and fish, since sheets comprising this combination has excellent properties for packing such goods. Polyethylene provides for good properties concerning wear of such a sheet and does also function as a water barrier, whereas the polyamide provides for strength and functions as an oxygen barrier.

In producing laminated plastic sheets it is possible to use a method called extrudering. Extrudering means that a substratum, a basic sheet (normally at room temperature), is provided with at least one plastic layer in a device for extrudering. In the device for extrudering this latter plastic layer is added in a semi molten state and the adherence thereof against the substratum is provided for by a press roll, which presses the future laminated plastic sheet against a cooling roll. Said cooling roll cools the laminated plastic sheets and in a later stage of the process the end product is wound up.

To provide for sufficient adherence it is sometimes necessary for certain combinations of laminated plastic sheets to use a binder between the layers. Laminated plastic sheets comprising polyethylene and polyamide is a typical combination which, according to tradition, requires the use of a binder (e.g. primer) in order to obtain sufficient adherence.

There are several disadvantages related to the use of a binder. It increases the cost because another component is required and since the complexity of the production is increased. Furthermore it brings about that the total thickness of the sheet and its weight increases.

Consequently, there is a common strive to avoid the use of a binder. Up to this date, however, one has not succeeded in finding a solution to this problem concerning a laminated plastic sheet comprising polyethylene and polyamide.

Surprisingly, it has now turned out to be possible to us, to produce a laminated plastic sheet comprising polyamide and polyethylene without the use of a binder.

Contrary to traditions within this area as well as the teaching of relevant citations, e.g. US A 4 687 688 and WO A 8705563, we have succeeded in finding a possibility for producing laminated plastic sheet comprising polyethylene and polyamide without the use of a binder. Despite axioms within this area we have tried and succeeded in finding a laminated plastic sheet comprising polyethylene, i.e. LLDPE (linear low density polyethylene) and polyamide, which laminated plastic sheet is producible without the use of a binder. This is a very important discovery, which solves a well known problem and which accordingly makes the production of such a laminated plastic sheet both cheaper and easier.

The invention being defined in the following claims is characterized in that there is no binder between the polyethylene and the polyamide layers, and accordingly that the layers are directly bonded to each other.

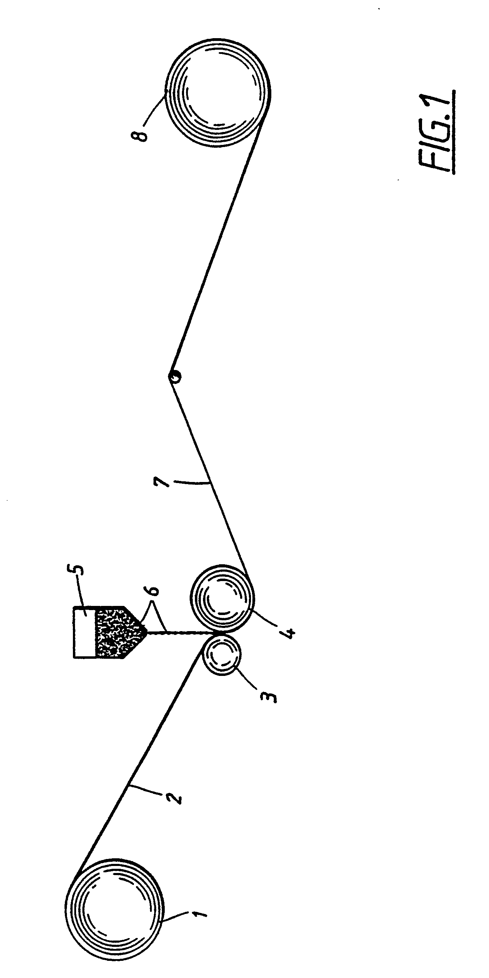

The single figure shows in a schematic manner the preferred installation for carrying out the inventive method. The installation comprises a first roll 1 for a substratum 2, a press roll 3, a cooling roll 4, an extruder 5 containing a semi molten plastic 6, the sheet like end product 7 and a final roll 8 for winding up the end product.

When carrying out a method according to the invention the extrudering process is preferably performed in a common manner, i.e. the semi molten polyamide 6 is added to the (room tempered) substratum 2, which in that case would be the LLDPE layer, or it could be performed the other way around, using the polyamide as a substratum.

In the following we will specify data concerning the production of a laminated polyethylene/polyamide sheet having specific properties. As a substratum one used a layer made of LLDPE having a thickness of 100 $10^{-6}$ meter. The speed by which the substratum was wound off, was about 80-100 m/minute. The substratum was at room temperature. The LLDPE, which was used at this time, was an octene based LLDPE. The polyamide which was used was a polyamide-6. The polyamide was kept at a temperature of 270-280° C and was extruded at a thickness of 80 $10^{-6}$ meter. The pressing roll 3 was kept at room temperature and the cooling roll 4 was kept at a temperature of 25° C. The end product was a polyamide/polyethylene laminate having a thickness of 180 $10^{-6}$ meter and a strength of adherence of 7 Newton/15 mm.

Apparently, the invention is not limited to this latter named mode of example but can be varied within the scope defined by the claims. The thickness of the layers for instance can be varied essentially. So far we have tested different thicknesses of the polyethylene layer varying between 20 $10^{-6}$ m and 100 $10^{-6}$ m, and the skilled man realizes that these are no limitations, especially not the upper one. Concerning the polyamide we have discovered that the adherence of the polyamide layer is diminishing if the thickness of this layer is below $30 \cdot 10^{-6}$ m. Any upper limit for the polyamide has not been found.

The temperature can of course be varied within a range, which is well known for the skilled man, which ranges can both be below and above those temperatures, which have been defined in the above described mode of example. Factors, which influence the choice of temperature are among others the type of extrudering device and the environmental temperature.

It is also obvious for the skilled man that the invention is not limited to an LLDPE, which is octene based but also other kinds of LLDPE may be used such as butene based. Furthermore, it is also evident that the invention is not limited to the specific use of polyamide-6 but also other similar types of polyamide may be used.

Furthermore, it is evident for the skilled man that it is possible to carry out the process in an opposite manner, i.e. instead of using the LLDPE as a substratum using the polyamide as a substratum. Such a method of carrying out the invention, however, is not preferred since such a process would be disadvantageous compared to the other one.

## Claims

1. Laminated plastic sheet comprising at least one layer made of polyamide and at least another layer made of LLDPE (linear low density polyethylene) being bonded to each other, **characterized** in that there is no binder between the two layers and accordingly that the layers are directly bonded to each other.

2. Laminated plastic sheet according to claim 1, **characterized** in that the total thickness of the sheet exceeds $50 \cdot 10^{-6}$ m.

3. Laminated plastic sheet according to claim 1, **characterized** in that the thickness of the polyamide layer exceeds $10 \cdot 10^{-6}$ m and preferably is about $50 \cdot 10^{-6}$ m.

4. Method for producing laminated plastic sheet according to claim 1, which laminated plastic sheet 7 comprises at least one layer polyamide and at least one layer polyethylene, which is produced by means of extrusion, whereby one layer is added to the other, **characterized** in that said added layer is added to the other layer without the use of a binder.

5. Method according to claim 4, **characterized** in that the plastic layer which is to be added is kept in such a manner in the extrusion device that it is kept at a semi molten state.

6. Method according to claim 5, **characterized** in that the temperature on the material, which is to be added, exceeds its melting point with at least $35°$ C.

7. Method according to claim 5, **characterized** in that the temperature of the material, which is to be added is kept within a temperature range of $45°$ C and $75°$ C of the melting point of said material, which is to be added.

FIG.1

EP 0 384 097 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| X | WO-A-8 404 037 (FIELD GROUP RESEARCH PTY LTD)<br>* Page 13, example A * | 1-3 | B 32 B 27/08 |
| A | * Page 11, lines 5-7 *<br>--- | 4 | |
| X | EP-A-0 268 422 (MOBIL OIL CORP.)<br>* Column 1, lines 30-39; column 1, line 49 - column 2, line 15; column 2, lines 36-49; column 3, lines 21-36 * | 1 | |
| A | ---  | 4 | |
| X | EP-A-0 214 314 (KOHJIN CO. LTD)<br>* Column 3, line 14 - column 4, line 6 *<br>--- | 1 | |
| A | US-A-3 421 960 (H.A. ARBIT)<br>* Claim 1; column 2, lines 46-50; column 3, lines 58-74 *<br>----- | 4-6 | |
| | | | TECHNICAL FIELDS SEARCHED (Int. Cl.5) |
| | | | B 32 B<br>B 05 D |

The present search report has been drawn up for all claims

| Place of search | Date of completion of the search | Examiner |
|---|---|---|
| THE HAGUE | 27-09-1989 | MCCONNELL C.H. |